# EUROPEAN PATENT APPLICATION

(11) **EP 4 527 176 A1**
(43) Date of publication of application: **26.03.2025**
(21) Application number: 23806841.5
(22) Date of filing: 12.05.2023
(51) Int. Cl.: A01D 34/00

(54) **ELECTRIC HEIGHT ADJUSTMENT DEVICE AND MOWER**

(30) Priority: 18.05.2022 CN 202221230443 U; 10.10.2022 CN 202222664470 U; 10.10.2022 CN 202222663165 U; 10.10.2022 CN 202211237298; 10.10.2022 CN 202211239112
(71) Applicant: Greenworks (Jiangsu) Co., Ltd., Changzhou, Jiangsu 213023 (CN)
(72) Inventor: LENNINGS, Eric, hangzhou, Jiangsu 213023 (CN); JONSSON, Henrik, hangzhou, Jiangsu 213023xxx (CN); ABRAHAMSSON, Oscar, hangzhou, Jiangsu 213023 (CN); ALZÉN, Jimmy, hangzhou, Jiangsu 213023 (CN); CAO, Jin, hangzhou, Jiangsu 213023 (CN); LI, Wanghao, hangzhou, Jiangsu 213023 (CN); GAO, Jie, hangzhou, Jiangsu 213023 (CN); PU, Zhigao, hangzhou, Jiangsu 213023 (CN)
(74) Representative: Bergenstråhle & Partners AB
(86) International application number: PCT/CN2023/093821
(87) International publication number: WO 2023/221889

(57) **Abstract**

An electric height adjustment device includes a supporting base, a cutting frame, a driving assembly and a measuring structure. The supporting base is provided with an accommodating cavity. The cutting frame is arranged in the accommodating cavity, performs a reciprocating linear motion in a direction perpendicular to a working plane, and is used to carry a cutting prime mover. The driving assembly includes an electric driving unit fixed on the supporting base and a transmission structure connected with the cutting frame. The transmission structure converts a rotation motion of the electric driving unit into a linear motion of the cutting frame. A height of the cutting prime mover from a ground can be adjusted through the driving assembly. The measuring structure includes at least two first sensors for sensing a hollow area and a shielding area, and signals collected by the at least two first sensors have a phase difference.

## Description

### CROSS REFERENCE TO RELATED APPLICATION

The present application is a continuation Application of PCT application No. PCT/CN2023/093821 filed on May 12, 2023, which claims the benefit of CN202221230443.6 filed on May 18, 2022, CN202222664470.0 filed on October 10, 2022, CN202222663165.X filed on October 10, 2022, CN202211237298.9 filed on October 10, 2022 and CN202211239112.3 filed on October 10, 2022. All the above are hereby incorporated by reference for all purposes.

### TECHNICAL FIELD

The disclosure relates a technical field of mowers, especially relates to an electric height adjustment device and a mower.

### BACKGROUND

Mowers are mechanical tools used to trim lawns, vegetation, etc. It may effectively improve the weeding efficiency of workers and reduce their labor intensity. However, different users have different requirements for lawn height. For this reason, mowers with adjustable mowing height have appeared on the market one after another, so that users may freely choose the mowing height and thus control the height of the lawn after mowing.

However, most conventional mowers use manual adjustment of their mowing height. The user rotates the height adjustment knob on the mower, and the height adjustment knob realizes the linear motion of the cutting motor through a gear pair. On one hand, this method has a small cutting height range (between 20mm and 60mm) and requires manual adjustment, and on the other hand, it is not conducive to realizing the long-distance height adjustment operation of the mower.

### SUMMARY

One or more embodiments of the disclosure provide an electric height adjustment device and a mower, which are used to solve a problem that a height adjustment of the mower in the prior art needs to rely on manual adjustment.

One or more embodiments of the disclosure provide the electric height-adjusting device, the electric height adjustment device includes a supporting base, a cutting frame, a driving assembly and a measuring structure. The supporting base is provided with an accommodating cavity. The cutting frame is arranged in the accommodating cavity of the supporting base, capable of performing a reciprocating linear motion in a direction perpendicular to a working plane and configured to carry a cutting prime mover. The driving assembly includes an electric driving unit and a transmission structure. The electric driving unit is fixed on the supporting base and the transmission structure is connected with the cutting frame. The transmission structure is configured to convert a rotation motion of the electric driving unit into a linear motion to drive the cutting frame to perform linear motion, and a height of the cutting prime mover from a ground is adjustable through the driving assembly. The measuring structure is configured to sense an adjustment height of the cutting frame, and includes a signal triggering part and at least two first sensors. The signal triggering part is provided with a plurality of hollow areas and a plurality of shielding areas, the hollow areas and the shielding areas are alternately distributed along a height direction, and the height direction is a lifting direction of the cutting frame. The first sensors are configured to sense the hollow areas and the shielding areas and arranged at intervals along the height direction, and signals collected by at least two of the first sensors have a phase difference.

A basic principle of the electric height adjustment device is that the rotation motion of the electric driving unit is converted into the linear motion of the cutting frame through the transmission structure. Since the cutting frame carries the cutting prime mover, a height of the prime mover from the ground may be adjusted by adjusting the height of the cutting frame from the ground, thereby realizing a height adjustment of the prime mover through the driving assembly. A movement direction of the cutting frame is determined by the measuring structure according to positive and negative values of the phase difference between the two sensors.

One or more embodiments of the disclosure provides the mower. The mower includes a casing, the electric height adjustment device, a cutting assembly, a walking assembly and a control assembly.

The electric height adjustment device mentioned above is installed on the casing, and configured to adjust a height of the cutting prime mover from the ground.

The cutting assembly is connected with the cutting prime mover to perform a cutting operation.

The walking assembly is located at a bottom of the casing.

The control assembly is configured to control the electric height adjustment device to work.

In summary, the disclosure has following beneficial effects:

The rotation motion of the electric driving unit is converted into linear motion of the cutting frame through the transmission structure, so that the height of the cutting frame from the ground can be adjusted. The movement direction of the cutting frame is determined by the measuring structure according to the positive and negative values of the phase difference between the two sensors. The height adjustment of the cutting prime mover may be achieved through the electric driving unit. There is no need for manual close operation to adjust the cutting height, which is convenient for improving an automation of the mower and is also conducive to remote operation.

### BRIEF DESCRIPTION OF THE DRAWINGS

FIG. 1 is a first schematic structural view of an overall structure according to at least one embodiment of the disclosure.
FIG. 2 is a second schematic structural view of the overall structure according to at least one embodiment of the disclosure.
FIG. 3 is a first cross-sectional view of the overall structure of the according to at least one embodiment of the disclosure.
FIG. 4 is a schematic structural view of a part of the structure according to at least one embodiment of the disclosure.
FIG. 5 is a first schematic structural view of a supporting base according to at least one embodiment of the disclosure.
FIG. 6 is a schematic structural view of a cutting frame according to at least one embodiment of the disclosure.
FIG. 7 is a schematic structural view of a fixing clip according to at least one embodiment of the disclosure.
FIG. 8 is a schematic structural view of a shock absorbing unit according to at least one embodiment of the disclosure.
FIG. 9 is a third schematic structural view of the overall structure according to at least one embodiment of the disclosure.
FIG. 10 is a second cross-sectional view of the overall structure of the according to at least one embodiment of the disclosure.
FIG. 11 is a second schematic structural view of the supporting base according to at least one embodiment of the disclosure.
FIG. 12 is a schematic structural view of a part of the supporting base after being cut according to at least one embodiment of the disclosure.
FIG. 13 is a schematic structural view of a driving assembly and the cutting frame according to at least one embodiment of the disclosure.
FIG. 14 is a schematic exploded view of a linear motion component according to at least one embodiment of the disclosure.
FIG. 15 is an enlarged view of position I in FIG. 14.
FIG. 16 is a schematic structural view of a shock absorbing unit according to another embodiment of the disclosure.
FIG. 17 is a schematic structural view of a standing base according to at least one embodiment of the disclosure.
FIG. 18 is a schematic structural view of a supporting protective plate according to at least one embodiment of the disclosure.
FIG. 19 is a schematic view of a position relationship of a first sensor and a second sensor according to at least one embodiment of the disclosure.
FIG. 20 is a schematic view of signals collected by the two first sensors in FIG. 19 when the cutting frame is moving upward.
FIG. 21 is a schematic view of the signals collected by the two first sensors in FIG. 19 when the cutting frame is moving downward.
FIG. 22 is an isometric view of a mower according to at least one embodiment of the disclosure.
FIG. 23 is an internal schematic structural view of the mower according to at least one embodiment of the disclosure.
FIG. 24 is a schematic structural view of the electric height adjustment device of the mower according to at least one embodiment of the disclosure.
FIG. 25 is a schematic exploded view of the electric height adjustment device of the mower according to at least one embodiment of the disclosure.
FIG. 26 is a schematic structural view of a driven gear of the mower according to at least one embodiment of the disclosure.
FIG. 27 is a cross-sectional view of the electric height adjustment device of the mower according to at least one embodiment of the disclosure.

### PART NUMBER DESCRIPTION

1-casing, 11-base, 12-cover, 2-electric height adjustment device, 3-walking device;
100-supporting base, 110-base body, 111-mounting post cavity, 120-accommodating drum body, 121-accommodating cavity, 121a-outer protruding part, 121b-first limiting hole, 121c-clamping hole, 122-guiding rail part, 130-supporting ring, 140-reinforcement rib, 150-mounting bracket, 151-first positioning hole, 160-fixing clip, 161-second limiting hole, 162-clamping spring, 163-spring hole, 164-clamping pin, 123-avoidance groove, 124-positioning groove, 120a-upper drum body, 120b-lower drum body, 170-sensor bracket, 172-first sensor, 171-second sensor;
200-cutting frame, 210-frame cavity, 211-large diameter section, 212-small diameter section, 220-first mounting groove, 230-second mounting groove, 240-screw hole, 250-frame cover, 260-frame body, 270-signal triggering part, 271-hollow area, 272-shielding area, 21-sliding passage, 221-first lug plate, 222-second lug plate, 223-mounting groove;
300-driving assembly, 310-electric driving unit, 320-reversing speed regulating mechanism, 321-transmission shaft, 322-limiting shaft sleeve, 330-transmission structure, 331-rotation motion component, 332-linear motion component, 340-first transmission structure, 341-worm, 342-worm gear, 350-second transmission structure, 351-transmission rod, 352-linear motion component, 3521-mounting base, 3522-screw sleeve, 3522a-screw hole, 3522b-first limiting component, 3522c-clamping groove, 3522d-positioning hole, 3523-second limiting component, 360-height adjustment motor, 370-transmission assembly, 371-threaded tube, 372-screw rod, 373-driving gear, 374-driven gear, 375-rib plate, 390-rotating assembly;
400-shock absorbing unit, 410-body part, 420-arched part, 421-guiding groove part, 430-first hook part, 440-second hook part;
500-sealing cover, 510-fixing ring, 511-mounting hole;
600-cutting prime mover;
700-standing base, 710-bottom plate, 720-connecting arc plate, 730-top plate, 740-bearing base, 750-protective annular plate;
800-supporting protective plate, 801-through hole;
900-fixing ring.

### DETAILED DESCRIPTION

The following describes the implementation of the disclosure through specific embodiments, and those skilled in the art can easily understand other advantages and effects of the disclosure from the content disclosed in this specification.

It should be noted that structures, proportions, sizes, etc. shown in drawings attached to this specification are only used to match content disclosed in the specification and are for understanding and reading of people familiar with this technology. They are not used to limit an implementation of the disclosure. Therefore, it has no technical substantive significance. Any modification of structure, change of proportional or adjustment of size shall still fall within a scope of this disclosure without affecting an effect that the disclosure can produce and the purpose that can be achieved. It should be noted that terms "upper", "lower", "left", "right", "middle" and "one" quoted in this specification are only for a convenience of description, and are not used to limit a scope of the disclosure. Changes or adjustments in their relative relationships shall also be regarded to be within the scope of the disclosure when there is no substantial change in the technical content.

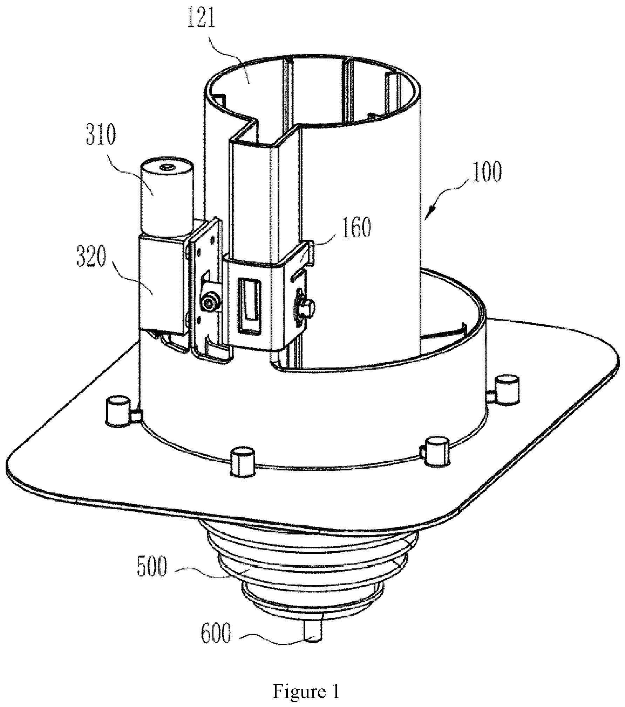

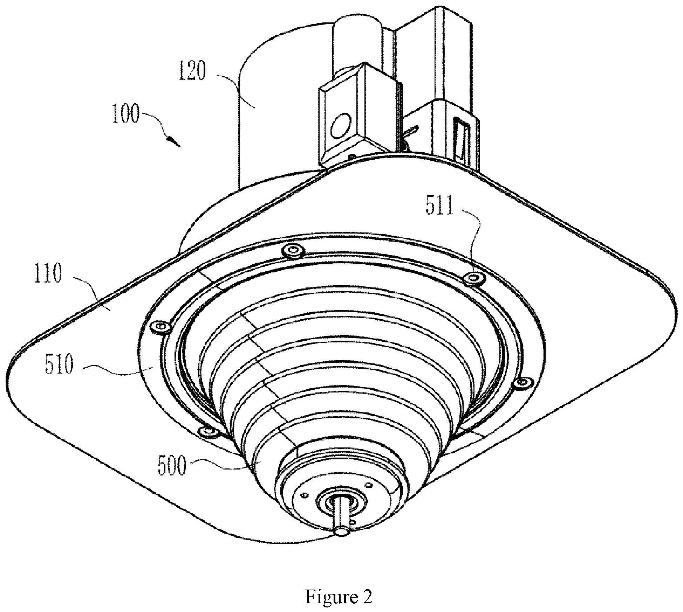

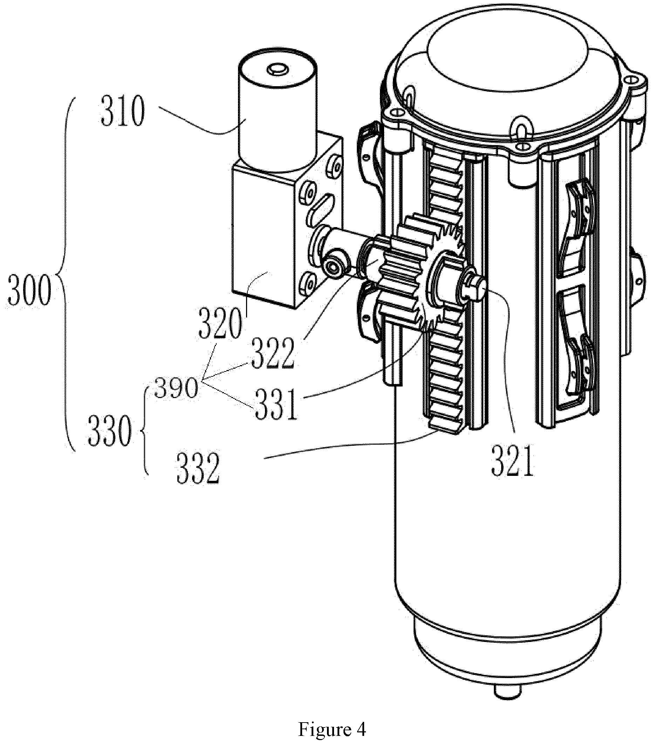

Please refer to FIG. 1 through FIG. 4 and FIG. 19. The disclosure provides an electric height adjustment device. The electric height adjustment device includes a supporting base 100, a cutting frame 200, a driving assembly 300 and a measuring structure.

The supporting base 100 is provided with an accommodating cavity 121;

The cutting frame 200 is arranged in the accommodating cavity 121 of the supporting base 100, capable of performing a reciprocating linear motion in a direction perpendicular to a working plane and configured to carrying a cutting prime mover 600;

The driving assembly 300 includes an electric driving unit 310 fixed on the supporting base 100 and a transmission structure 330 connected with the cutting frame 200, the transmission structure 330 converts a rotation motion of the electric driving unit 310 into a linear motion of the cutting frame 200, and a height of the cutting prime mover 600 from a ground is adjustable through the driving assembly 300; and

The measuring structure is configured to sense an adjustment height of the cutting frame, and includes a signal triggering part 270 and at least two first sensors 172. The signal triggering part 270 is provided with a plurality of hollow areas 271 and a plurality of shielding areas 272, and the hollow areas 271 and the shielding areas 272 are alternately distributed along a height direction. The first sensors 172 are configured to sense the hollow areas 271 and the shielding areas 272 and arranged at intervals along the height direction, and signals collected by at least two of the first sensors 172 have a phase difference. The height direction is a lifting direction of the cutting frame 200.

Please refer to FIG. 1 through FIG. 4. The transmission structure 330 includes linear motion components 332, 352 connected with the cutting frame 200 and having a motion direction perpendicular to the working plane, and a rotating assembly 390 connected between the linear motion component 332, 352 and the electric driving unit 310. The electric driving unit 310 is in a transmission connection with the linear motion components 332, 352 through the rotating assembly, and the rotating assembly is configured to convert the rotation motion of the electric driving unit 310 into a linear motion of the linear motion components 332, 352 to drive the cutting frame 200 to move linearly.

In an embodiment of the disclosure, the rotating assembly 390 includes a rotation motion component 331 connected with the electric driving unit 310. The rotation motion component 331 is provided with a first tooth part, the linear motion component 332 is provided with a second tooth part, and the first tooth part and the second tooth part are meshed with each other. A height of the cutting prime mover 600 from a ground can be adjusted by the driving assembly 300.

In an embodiment of the disclosure, an output end of the electric driving unit 310 is arranged horizontally. In other embodiments, the output end of the electric driving unit 310 may also be arranged vertically. The electric driving unit 310 may be a driving motor in some embodiments.

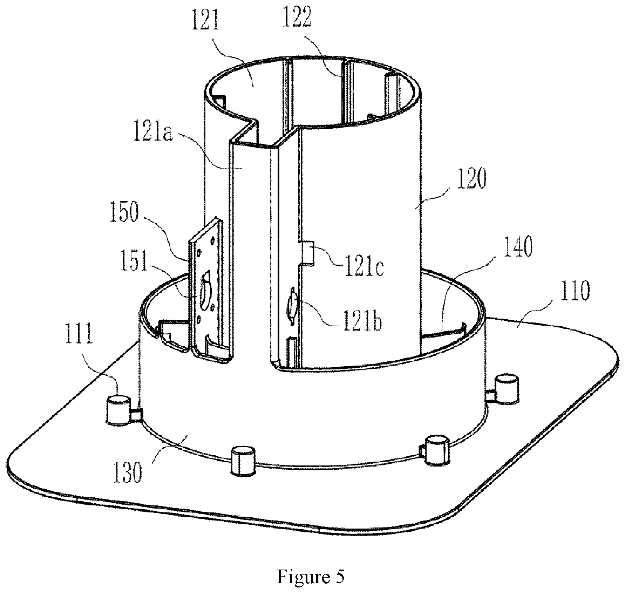

Please refer to FIG. 5. In an embodiment of the disclosure, the supporting base 100 includes a base body 110, an accommodating drum body 120 and a supporting ring 130. The accommodating drum body 120 is arranged on the base body 110, and the accommodating drum body 120 is connected with the base body 110 through a supporting ring 130. The supporting ring 130 is arranged on the base body 110 around an outside of the accommodating drum body 120. A height of the supporting ring 130 is lower than a height of the accommodating drum body 120. A plurality of reinforcement ribs 140 is connected between an inner wall of the supporting ring 130 and an outer wall of the accommodating drum body 120 along a circumferential direction. This structure ensures that the accommodating drum body 120 and the base body 110 are firmly connected.

In an embodiment of the disclosure, the accommodating cavity 121 is arranged in the accommodating drum body 120. The cutting frame 200 and the transmission structure 330 are located in the accommodating cavity 121, and the accommodating cavity 121 is provided with an outer protruding part 121a corresponding to a position where the rotation motion component 331 is installed, so as to provide an accommodating space for the transmission structure 330. The outer protruding part 121a is in contact with an outer wall of the supporting ring 130, and a cross-section of the outer protruding part 121a in a horizontal direction is U-shaped.

In an embodiment of the disclosure, a mounting bracket 150 is arranged on the outer wall of the accommodating drum body 120, and the electric driving unit 310 is installed on the mounting bracket 150. The mounting bracket 150 is provided with a first positioning hole 151 for positioning an output end of the motor driving unit.

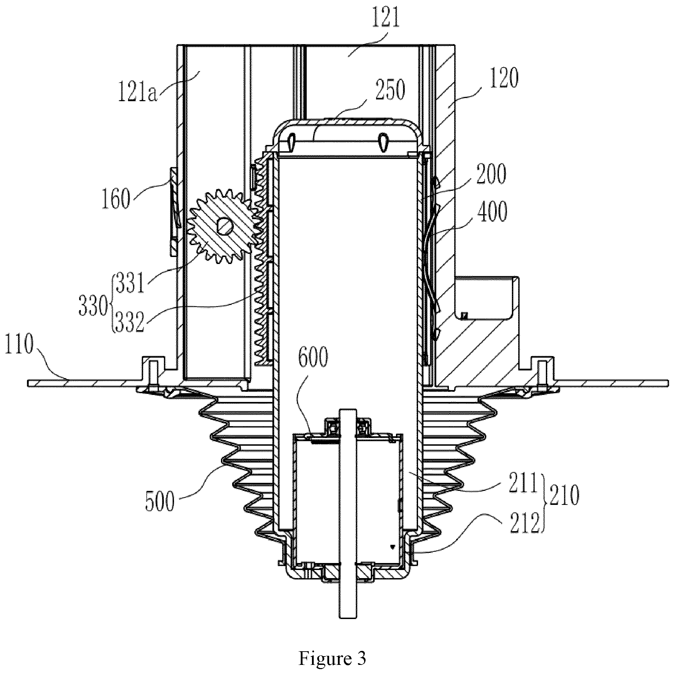

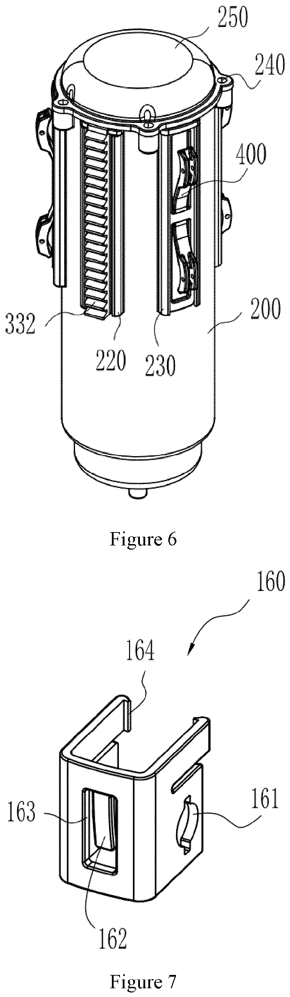

Please refer to FIG. 3 and FIG. 6. In an embodiment of the disclosure, the cutting frame 200 is a cylindrical structure, and is provided with a frame cavity 210 inside. The cutting prime mover 600 is arranged in the frame cavity 210. The frame cavity 210 is provided with a small diameter section 212 and a large diameter section 211. The large diameter section 211 is located above the small diameter section 212. A diameter of the small diameter section 212 matches an outer edge size of the cutting prime mover 600 to limit the cutting prime mover 600. The cutting prime mover 600 is vertically arranged in the cutting frame 200, and an output end of the cutting prime mover 600 extends out of a bottom of the cutting frame 200. When the cutting frame 200 is moved, which means that the cutting prime mover 600 is moved synchronously therewith, a height adjustment of the cutting prime mover 600 is realized.

In an embodiment of the disclosure, in order to install the linear motion component 332, a first mounting groove 220 is arranged on an outer wall of the cutting frame 200. The linear motion component 332 is clamped in the first mounting groove 220, and a top end of the linear motion component 332 is fixed by a frame cover 250. When the linear motion component 332 is driven by the rotation motion component 331 to perform a linear motion, it drives the cutting frame 200 fixed thereto to move together.

In an embodiment of the disclosure, the cutting frame 200 is provided with a detachable frame cover 250. In an embodiment, a top of the cutting frame 200 is evenly distributed with a plurality of screw holes 240 along the circumferential direction, and the frame cover 250 is correspondingly provided with a plurality of through holes along the circumferential direction. Bolts pass through the through holes and the screw holes 240 in sequence to fix the frame cover 250 on the cutting frame 200, thereby ensuring a firm connection and convenient assembly and disassembly. In this embodiment, four bolts are provided to connect the frame cover 250 with the cutting frame 200. When the frame cover 250 is opened, the cutting prime mover 600 may be removed or installed.

A rotation axis direction of the rotation motion component 331 and a motion direction of the linear motion component 332 are perpendicular to each other, and the motion direction of the linear motion component 332 is consistent with a motion direction of the cutting frame 200. The rotation motion is converted into linear motion through the transmission structure 330, and the height adjustment of the cutting prime mover 600 may be powered through the electric driving unit 310.

In an embodiment of the disclosure, the rotation motion component 331 is a gear, and the linear motion component 332 is a gear rack. This structure has large bearing capacity, high transmission accuracy, may be connected and extended in unlimited length, has smooth and efficient power transmission, is low cost and saves space, and can effectively convert rotation motion into linear motion. The disclosure is connected with the electric driving unit through the rotating assembly and a linear motion assembly to convert the rotation motion of the electric driving unit into linear motion. The rotating assembly and the linear motion assembly may be selected from gear racks, worm gears, worms, crankshafts, eccentric wheels/cams, half teeth with springs, internal teeth and other mechanisms as needed. In this embodiment, the rotation motion of the electric driving unit is converted into linear motion through a structure of the gear rack and the gear.

In some embodiments, the transmission structure 330 is connected with the output end of the electric driving unit 310 through a transmission shaft 321, and the transmission shaft 321 is arranged horizontally. In an embodiment, the electric driving unit 310 is a driving motor, and an output shaft of the driving motor is connected with the transmission structure 330 through the transmission shaft 321. A first end of the transmission shaft 321 is connected with the output shaft of the driving motor through a key connection or a tight screw connection, and a second end of the transmission shaft 321 extends into the supporting base 100 to be connected to the rotation motion component 331. The rotation motion component 331 is sleeved on the transmission shaft 321, and may be radially limited by a flat square structure between the rotation motion component 331 and the transmission shaft 321 specifically. And axially limiting shaft sleeves 322 are arranged on both sides of the rotation motion component 331, and the limiting shaft sleeves 322 are sleeved on the transmission shaft 321.

Please refer to FIG. 7. In an embodiment of the disclosure, the electric height adjustment device further includes a fixing clip 160 arranged on an outer wall of the accommodating cavity 121 of the supporting base 100, and the transmission shaft 321 passes through the fixing clip 160 and is supported thereby. In an embodiment, the fixing clip 160 is arranged on the outer protruding part 121a of the supporting base 100 at a position corresponding to the transmission shaft 321. The fixing clip 160 is clamped on an outer wall of the outer protruding part 121a to fix and support the transmission shaft 321. Since the outer protruding part 121a is U-shaped, the fixing clip 160 is also U-shaped. A first limiting hole 121b for the limiting shaft sleeve 322 to pass through is arranged on a side wall of the outer protruding part 121a corresponding to the transmission shaft 321, and a second limiting hole 161 for the limiting shaft sleeve 322 to pass through is arranged on an opposite side wall of the fixing clip 160. The second limiting hole 161 matches the first limiting hole 121b, and a clamping spring 162 is arranged on a connecting wall between the two opposite side walls. The clamping spring 162 is arc-shaped, and a first end of the clamping spring 162 is arranged in a spring hole 163, and a second end of the clamping spring 162 is a free end, so that it may play a tight clamping role. A clamping pin 164 is arranged at one end of the opposite side wall close to the supporting base 100, and a clamping hole 121c for the clamping pin 164 to be clamped is arranged on the accommodating cavity 121. The clamping spring 162 cooperates with the clamping pin 164 to ensure that the fixing clip 160 is clamped tightly on the outer protruding part 121a of the supporting base 100.

In some embodiments, the rotating assembly 390 further includes a speed regulating mechanism 320, and the transmission structure 330 is connected with the output end of the electric driving unit 310 through the reversing speed regulating mechanism 320. In an embodiment, the reversing speed regulating mechanism 320 includes a first rotation component connected with the output end of the electric driving unit 310 and a second rotation component connected with the rotation motion component 331. The first rotation component and the second rotation component move in coordination, rotation axes of the first rotation component and the second rotation component are perpendicular to each other, and rotation axes of the rotation motion component 331 and the second rotation component are coaxial. This structure relies on the reversing speed regulating mechanism 320 to transmit power of the electric driving unit 310 to the transmission structure 330. The reversing speed regulating mechanism 320 may convert a direction of power transmission through the vertically arranged first rotation component and the second rotation component on one hand, and may also regulate the transmission speed on the other hand.

In an embodiment of the disclosure, the first rotation component is provided with a third tooth part, the second rotation component is provided with a fourth tooth part, and the third tooth part and the fourth tooth part are meshed with each other. A meshing transmission between the third tooth part and the fourth tooth part may ensure a smooth transmission.

In an embodiment of the disclosure, the rotation motion component 331 is connected with the second rotation component 310 through the transmission shaft 321, and the transmission shaft 321 is arranged horizontally. In an embodiment, the transmission shaft 321 is perpendicular to the output shaft of the electric driving unit 310, and is provided with a first limiting shoulder for axially limiting the second rotation component, and a second limiting shoulder for axially limiting the rotation motion component 331. Axially limiting shaft sleeves 322 are arranged on both sides of the rotation motion component 331, and one of the limiting shaft sleeves 322 abuts against the second limiting shoulder.

In an embodiment of the disclosure, the transmission structure 330 is located inside the supporting base 100, one end of the transmission shaft 321 connected to the rotation motion component 331 passes through the supporting base 100, and one end of the transmission shaft 321 connected with the second rotation component is located outside the supporting base 100. And, the fixing clip 160 is arranged on the outer protruding part 121a of the supporting base 100 at a position corresponding to the transmission shaft 321, and the fixing clip 160 is U-shaped. The fixing clip 160 is clamped on the outer wall of the outer protruding part 121a to fix and support the transmission shaft 321.

In an embodiment of the disclosure, the first rotation component is a worm matched with the electric driving unit 310, and the second rotation component is a worm gear matched with the worm. This structure is a multi-tooth meshing transmission, which may speed up or slow down, with a smooth transmission and low noise, and may obtain a larger transmission ratio. In addition, the structure has self-locking properties and may achieve a reverse self-locking, which means that only the worm can drive the worm gear, but the worm gear cannot drive the worm. This reverse self-locking property may play a safety protection role.

In an embodiment of the disclosure, in order to absorb shock from the linear motion of the cutting frame 200, the electric height adjustment device further includes a shock absorbing unit 400 arranged between the cutting frame 200 and the supporting base 100. The shock absorbing unit 400 is elastic, a first side of the shock absorbing unit 400 is clamped on an outer wall of the cutting frame 200, and a second side of the shock absorbing unit is configured to slide relative to an inner wall of the supporting base 100. Through arranging the shock absorbing unit 400, the shock absorbing unit 400 reciprocates together with the cutting frame 200. An elastic force of the shock absorbing unit 400 can ensure that the cutting frame 200 moves smoothly during a reciprocating motion, thereby playing a role of absorbing shock.

In an embodiment of the disclosure, in order to guide direction for the linear motion of the cutting frame 200, the electric height adjustment device further includes a guiding structure arranged between the cutting frame 200 and the supporting base 100. The guiding structure may be a guiding rail part 122 and a guiding groove part 421 that are matched with each other. Wherein, the guiding rail part 122 is arranged on the inner wall of the supporting base 100 along a movement direction of the cutting frame 200, and the guiding groove part 421 matched with the guiding rail part 122 is arranged on the shock absorbing unit 400. Sizes of the guiding rail part 122 and the guiding groove part 421 are adapted to guide the guiding groove part 421 of the shock absorbing unit 400 to slide along the guiding rail part 122. The guiding groove part 421 is clamped on the guiding rail part 122 to provide guidance and support for the reciprocating motion of the cutting frame 200. In this disclosure, shapes of the guiding rail part 122 and the guiding groove part 421 are not specifically limited, as long as the guiding groove part 421 can be clamped and slid on the guide rail portion 122. In some embodiments, a length of the guiding rail part 122 is greater than a length of the guiding groove part 421.

In an embodiment of the disclosure, in order to ensure a balance of shock absorption and guidance, there are a plurality of the shock absorbing units 400 and are arranged along the circumference direction of the cutting frame 200. In this embodiment, there are five shock absorbing units 400 arranged along the circumference direction of the cutting frame 200. Three shock absorbing units 400 are arranged on opposite sides corresponding to the transmission structure 330, and two shock absorbing units 400 are arranged symmetrically close to the transmission structure 330.

In an embodiment of the disclosure, in order to install the shock absorbing unit 400, a plurality of second mounting grooves 230 are arranged on the outer wall of the cutting frame 200, and the second mounting grooves 230 are parallel to the first mounting grooves 220. The plurality of second mounting grooves 230 are arranged at a same height, and a number of the second mounting grooves 230 corresponds to a number of the shock absorbing units 400. One shock absorbing unit 400 is arranged in each second mounting groove 230, and a top end of the shock absorbing unit 400 is fixed by the frame cover 250. When the cutting frame 200 moves linearly, the shock absorbing unit 400 connected with the cutting frame 200 is driven to move together.

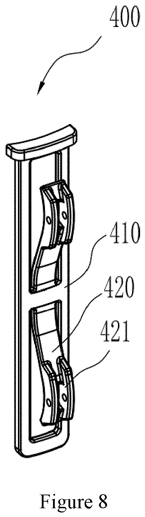

Please refer to FIG. 8. In an embodiment of the disclosure, the shock absorbing unit 400 is in an arch bridge shape, and includes a body part 410 and two arched parts 420 symmetrically arranged. A first end of each arched part 420 is connected with the body part 410, and a second end of each arched part 420 is provided with the guiding groove part 421. The body part 410 is fixedly connected with the cutting frame 200, and the guiding groove part 421 is slidably connected with the supporting base 100. This structure not only utilizes an elasticity of the shock absorbing unit 400 itself to achieve shock absorption, but also utilizes a sliding cooperation between the guiding groove part 421 and the guiding rail part 122 arranged on the supporting base100 to achieve a guiding function.

And it may be understood that a guiding wheel (not shown in the figure) may be installed on the guiding groove part 421. The guiding wheel is rotatably connected with the guiding groove part 421 and can rotate around its own axis. The guiding wheel is slidably matched with the guiding rail part 122 arranged on the supporting base 100 to achieve a guiding function. In this way, a friction between the shock absorbing unit 400 and the supporting base 100 during a sliding guide can be reduced.

In an embodiment of the disclosure, a sealing cover 500 is connected between the cutting frame 200 and a bottom of the supporting base 100, a plurality of connected folding sections is arranged on the sealing cover 500, and when the cutting frame 200 performs the reciprocating linear motion, the sealing cover 500 expands or contracts. A shield bottom hole is arranged at a bottom of a sealing cover 500 for the output end of the cutting prime mover 600 to extend out, and the sealing cover 500 plays a role in dust and water protection for the cutting frame 200.

In an embodiment of the disclosure, an outer size of one end of the sealing cover 500 connected with the bottom of the supporting base 100 is larger than an outer size of one end of the sealing cover 500 connected with a bottom of the cutting frame, and the sealing cover 500 is in a truncated cone shape. The sealing cover 500 is connected with the bottom of the supporting base 100 through a fixing ring 510. A plurality of mounting holes 511 are circumferentially arranged on the fixing ring 510. A plurality of mounting post cavities 111 are correspondingly arranged on the base body 110 of the supporting base 100. The mounting post cavities 111 and an outer wall of the supporting ring 130 are connected through the reinforcement rib 140 to enhance a strength of the mounting post cavities 111. Bolts are used to pass through the mounting holes 511 and arranged in the mounting post cavity 111 to connect and fix the sealing cover 500 with the bottom of the supporting base 100.

The disclosure further provides a mower, and the mower includes the electric height adjustment device mentioned above. In some embodiments, the mower includes a casing, the electric height adjustment device, a cutting assembly, a walking assembly and a control assembly.

The electric height adjustment device is installed on the casing, and configured to adjust a height of the cutting prime mover from the ground.

The cutting assembly is connected with the cutting prime mover 600 for cutting.

The walking assembly is located at a bottom of the casing.

The control assembly is configured to control the electric height adjustment device to work.

Wherein, the electric height adjustment device includes the supporting base 100, the cutting frame 200 and the driving assembly 300.

The supporting base 100 is provided with the accommodating cavity 121.

The cutting frame 200 is arranged in the accommodating cavity 121 of the supporting base 100, capable of performing the reciprocating linear motion in the direction perpendicular to the working plane and configured to carrying the cutting prime mover 600.

The driving assembly 300 includes the electric driving unit 310 fixed on the supporting base 100 and the transmission structure 330 connected with the cutting frame 200. The transmission structure 330 converts the rotation motion of the electric driving unit 310 into the linear motion to drive the cutting frame 200. The transmission structure 330 includes the rotation motion component 331 connected with the electric driving unit 310 and the linear motion component 332 fixed with the cutting frame 200. The rotation motion component 331 is provided with the first tooth part, the linear motion component 332 is provided with the second tooth part, and the first tooth part and the second tooth part are meshed with each other. The height of the cutting prime mover 600 from the ground can be adjusted by the driving assembly 300.

In an embodiment of the disclosure, the walking assembly includes moving wheels, at least three moving wheels are arranged and mounted on the casing to facilitate the mower to walk, and the walking assembly further includes a motor for driving the moving wheels to rotate.

In an embodiment of the disclosure, the cutting assembly includes a cutting disc and a plurality of cutting blades installed on the cutting disc. The cutting blades are evenly distributed along a circumference of the cutting disc. The cutting assembly is driven to move through the cutting prime mover 600 for cutting. Since the output end of the cutting prime mover 600 is connected with the cutting assembly, the height of the cutting frame 200 may be adjusted by the electric height adjustment device, so that the height of the cutting prime mover 600 from the ground may be adjusted, thereby achieving the adjustment of the height of the cutting assembly from the ground.

According to different needs of users, the electric height adjustment device is controlled by the control assembly to adjust different cutting heights. Wherein, through controlling the electric driving unit 310 through an electric control system, the height of the cutting prime mover 600 from the ground may be adjusted. This may be achieved through a remote control or through an own electrical control panel of the device.

In summary, with the electric height adjustment device and the mower of the disclosure, the rotation motion of the electric driving unit 310 is converted into linear motion of the cutting frame 200 through the transmission structure 330, so that the height of the cutting frame from the ground can be adjusted. The height adjustment of the cutting prime mover 600 may be achieved through the electric driving unit 310. There is no need for manual close operation to adjust the cutting height, which is convenient for improving an automation of the mower and is also conducive to remote operation.

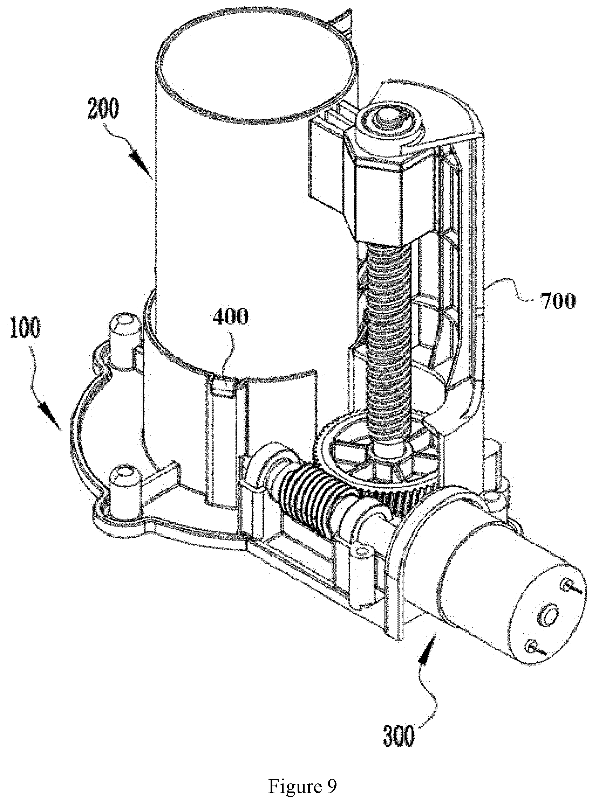

Please refer to FIG. 9 through FIG. 11 and FIG. 13. The disclosure provides the electric height adjustment device. The electric height adjustment device includes the supporting base 100, the cutting frame 200, and a driving assembly 300.

The supporting base 100 is provided with the accommodating cavity 121.

The cutting frame 200 is arranged in the accommodating cavity 121 of the supporting base 100, capable of performing the reciprocating linear motion in the direction perpendicular to the working plane and configured to carrying the cutting prime mover 600.

The driving assembly 300 includes the electric driving unit 310 fixed on the supporting base 100, the second transmission structure 350 connected with the cutting frame 200 and the first transmission structure 340 connected between the electric driving unit 310 and the second transmission structure 350. The first transmission structure 340 includes the worm gear 342 and the worm 341 that match each other. The worm 341 is connected with the output end of the electric driving unit 310, and the worm gear 342 is connected with second transmission structure 350. The second transmission structure 350 is configured to convert the rotation motion of the worm gear 342 into the linear motion of the cutting frame 200 in the direction perpendicular to the working plane. The height of the cutting prime mover 600 from the ground can be adjusted by the driving assembly 300. In this embodiment, the rotating assembly 390 includes the transmission rod 351, the worm gear 342 and the worm 341. The worm 341 is connected with the output end of the electric driving unit 310, the worm gear 342 is connected with a first end of the transmission rod 351, a second end of the transmission rod 351 is connected with the linear motion component 352, and the linear motion component 352 is configured to convert the rotation motion of the worm gear 342 into the linear motion of the cutting frame 200 in the direction perpendicular to the working plane.

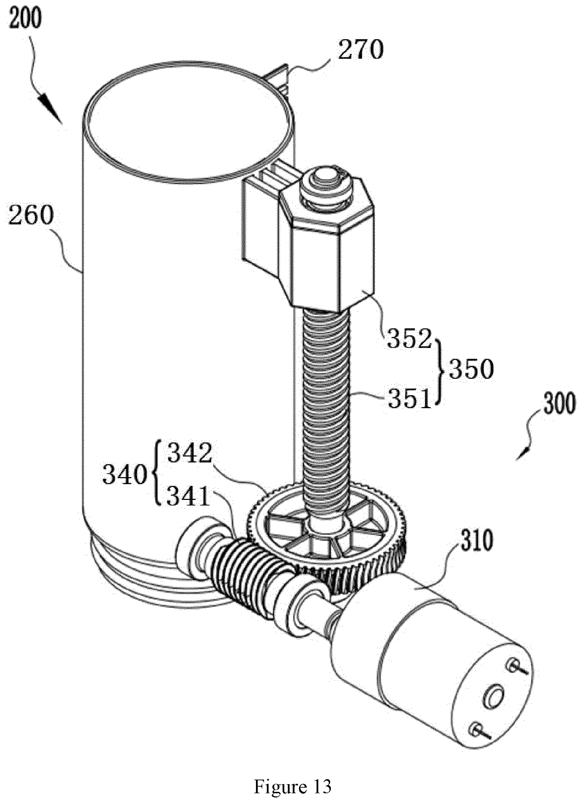

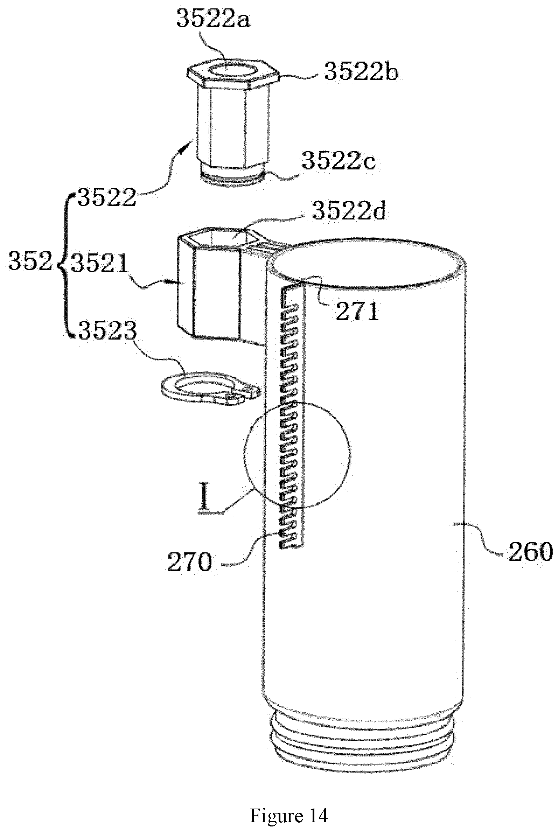

Please refer to FIG. 13 and FIG. 14. In an embodiment of the disclosure, the second transmission structure 350 includes the transmission rod 351 connected with the worm gear 342 and the linear motion component 352 fixed to the cutting frame 200. The linear motion component 352 is provided with a screw hole 3522a. The transmission rod 351 is inserted into the screw hole 3522a and threaded with the screw hole 3522a. The electric driving unit 310 may be the driving motor in some embodiments.

Please refer to FIG. 13. In an embodiment of the disclosure, the worm gear 342 is coaxially sleeved on the transmission rod 351, rotation axes of the transmission rod 351 and the worm gear 342 are along the vertical direction, and the rotation axis of the worm 341 is along the horizontal direction.

Please refer to FIG. 9 and FIG. 13. In an embodiment of the disclosure, the supporting base 100 is provided with a standing base 700, and the electric driving unit 310 and the worm 341 are both arranged on the supporting base 100. The first end of the transmission rod 351 is connected with the supporting base 100, the second end of the transmission rod 351 is connected with the standing base 700, and the worm gear 342 is located below the linear motion component 352. In this structure, a height of a center of gravity of the electric driving unit 310 and the first transmission structure 340 is closer to the supporting base 100, which is beneficial to lowering a center of gravity of an entire height adjustment structure, and is also beneficial to a stable mowing.

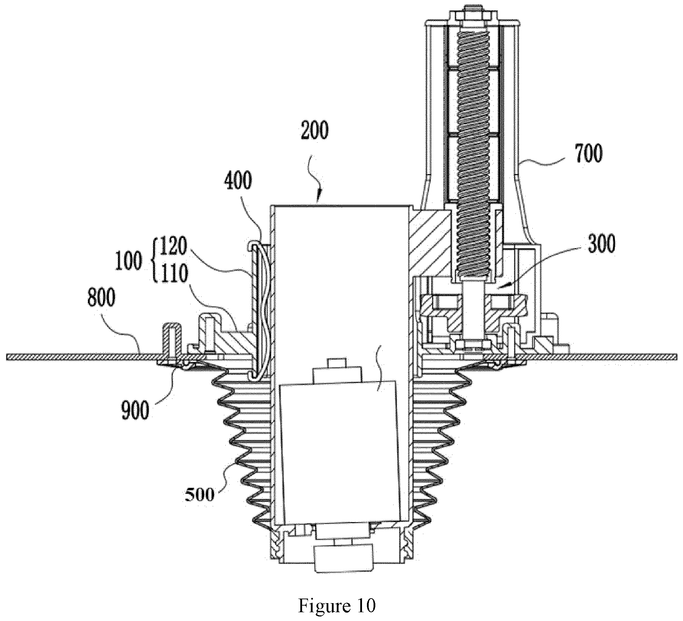

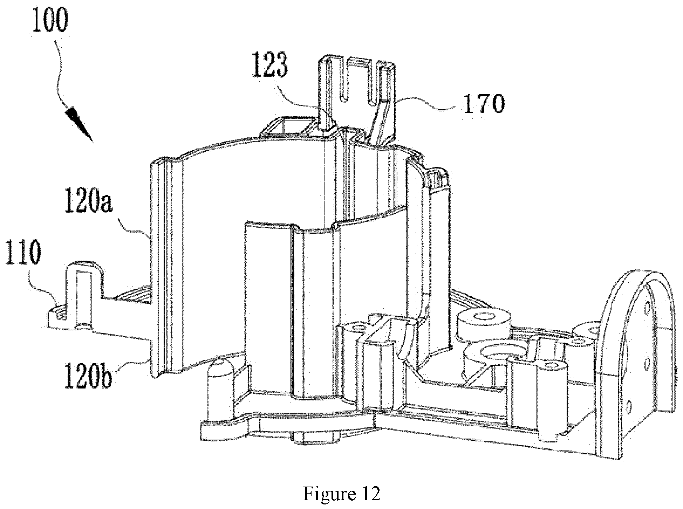

Please refer to FIG. 10 and FIG. 12. In an embodiment of the disclosure, the supporting base 100 includes the base body 110 and the accommodating drum body 120. The cutting frame 200 is arranged in the accommodating drum body 120, and the accommodating drum body 120 includes an upper drum body 120a and a lower drum body 120b. The upper drum body 120a is located above the base body 110, and the lower drum body 120b is located below the base body 110. Compared with a method of directly arranging the entire accommodating drum body 120 above the supporting base 110, the supporting base of this structure has a lower center of gravity, which is conducive to the more stable mowing.

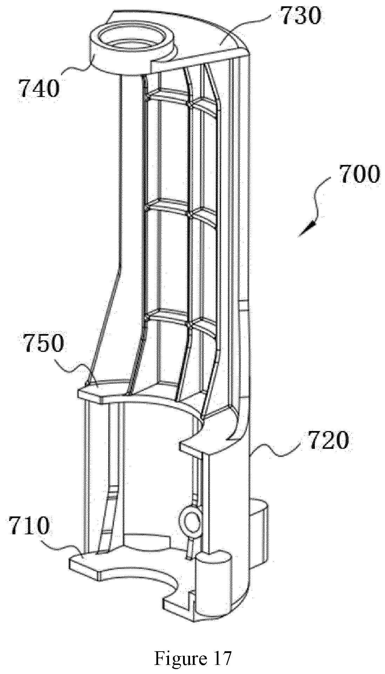

Please refer to FIG. 9 and FIG. 17. In an embodiment of the disclosure, the standing base 700 includes a bottom plate 710 arranged on the supporting base 100, a top plate 730 arranged above the bottom plate 710, and a connecting arc plate 720 connected between the bottom plate 710 and the top plate 730. The bottom plate 710 is in a semi-annular shape. A bearing base 740 is arranged on the top plate 730. An upper end of the transmission rod 351 is positioned in the bearing base 740 through a first bearing. After a lower end of the transmission rod 351 passes through the bottom plate 710, the transmission rod 351 is positioned on the supporting base 100 through a second bearing.

In some embodiments, please refer to FIG. 17. The standing base 700 further includes a protective annular plate 750, and the protective annular plate 750 is arranged on the connecting arc plate 720. The protective annular plate 750 is located above the bottom plate 710 and below the top plate 730, so that the protective annular plate 750, the bottom plate 710 and the connecting arc plate 720 together form a protective space for protecting the worm gear 342. In FIG. 17, the standing base 700 further includes the reinforcing rib, and the reinforcing rib may enhance mechanical properties of the standing base 700.

Please refer to FIG. 14. In an embodiment of the disclosure, the linear motion component 352 includes a mounting base 3521 fixedly connected with the cutting frame 200 and a screw sleeve 3522 detachably arranged on the mounting base 3521, and an inner hole of the screw sleeve 3522 is the screw hole 3522a. When this structure is adopted, if the screw hole 3522a of the screw sleeve 3522 is excessively worn, the screw sleeve 3522 may be directly replaced without replacing the entire linear motion component 352, and there is no need to replace the cutting frame 200 connected with the linear motion component 352, which is beneficial to reduce maintenance costs.

Please refer to FIG. 14. In an embodiment of the disclosure, the mounting base 3521 is provided with a positioning hole 3522d, and the screw sleeve 3522 is arranged in the positioning hole 3522d. An outer wall of the screw sleeve 3522 is matched with an inner wall of the positioning hole 3522d through an anti-rotation structure, and the anti-rotation structure limits a rotation of the screw sleeve 3522 relative to the mounting part 3521.

In some embodiments, please refer to FIG. 14. A cross-sectional profile of the anti-rotation structure is hexagonal, which means that a cross-sectional profile of the positioning hole 3522d is hexagonal, and the screw sleeve 3522 has a hexagonal cross-sectional profile matched with the positioning hole 3522d. In actual implementation, a cross-section of the anti-rotation structure may also be a polygon of other numbers. Of course, the cross-sectional profile of the screw sleeve and the cross-sectional profile of the positioning hole may also be circular, and in order to limit a rotation of the screw sleeve relative to the mounting base, the screw sleeve and the positioning hole may adopt an interference fit, or a key or other connecting component may be provided between the screw sleeve and the positioning hole.

Please refer to FIG. 13 and FIG. 14. In an embodiment of the disclosure, two ends of the screw sleeve 3522 are respectively provided with a first limiting component 3522b and a second limiting component 3523 for limiting an axial position of the screw sleeve 3522 relative to the mounting base 3521. The first limiting component 3522b abuts against an outside of a first end of the mounting base 3521, and the second limiting component 3523 abuts against an outside of a second end of the mounting base 3521. In FIG. 14, the first end is an upper end of the mounting base 3521, and the second end is a lower end of the mounting base 3521.

In some embodiments, please refer to FIG. 14. The first limiting component 3522b is an outer protruding flange arranged on the screw sleeve 3522, and the second limiting component 3523 is a detachable circlip arranged on the screw sleeve 3522. The second limiting component 3523 (such as the circlip) is detachably clamped in a clamping groove 3522c of the screw sleeve 3522. When disassembling the screw sleeve 3522, it is only necessary to remove the circlip to remove the screw sleeve 3522 from a mounting part 3521.

In some embodiments, a shock absorbing element (not shown) is arranged between the inner wall of the positioning hole 3522d and the outer wall of the screw sleeve 3522. For example, the shock absorbing element may be a rubber sleeve, the rubber sleeve is sleeved outside the screw sleeve 3522 and matches an inner profile of the positioning hole 3522d. For another example, the shock absorbing element may be a plurality of rubber sheets. When the screw sleeve 3522 has a polygonal cross-sectional profile, the rubber sheets are bonded one by one to the outer side walls of the screw sleeve 3522. When the screw sleeve (3522) is installed in the positioning hole 3522d, the rubber sheets are located between the inner wall of the positioning hole 3522d and the outer wall of the screw sleeve 3522.

Please refer to FIG. 9 and FIG. 10. In an embodiment of the disclosure, the electric height adjustment device further includes the shock absorbing unit 400 arranged between cutting frame 200 and the supporting base 100. The shock absorbing unit 400 is clamped on the supporting base 100 and can slide relative to the outer wall of the cutting frame 200. Through arranging the shock absorbing unit 400 on the supporting base 100, the cutting frame 200 makes the reciprocating linear motion relative to the shock absorbing unit 400. The elastic force of the shock absorbing unit 400 can ensure that the cutting frame 200 moves smoothly during the reciprocating motion, thereby playing the role of absorbing shock.

Please refer to FIG. 9, FIG. 10 and FIG. 11. In an embodiment of the disclosure, a plurality of positioning grooves 124 is formed on a cavity wall of the accommodating cavity 121, and the shock absorbing unit 400 is arranged in the positioning grooves 124.

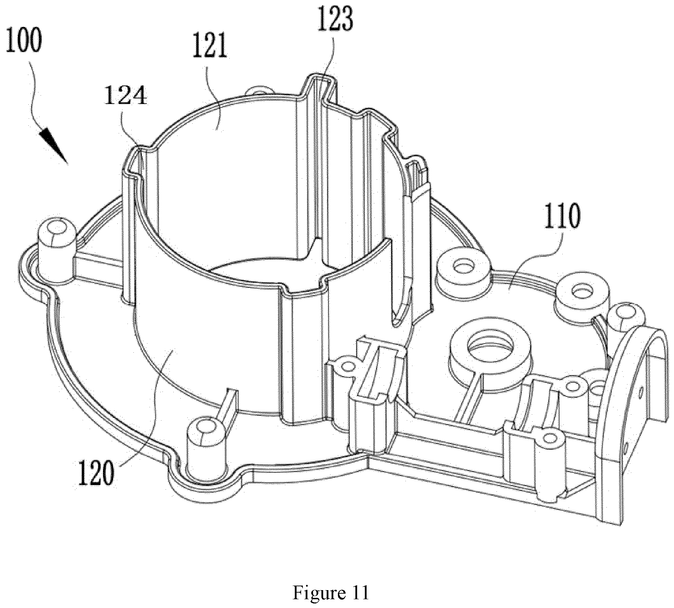

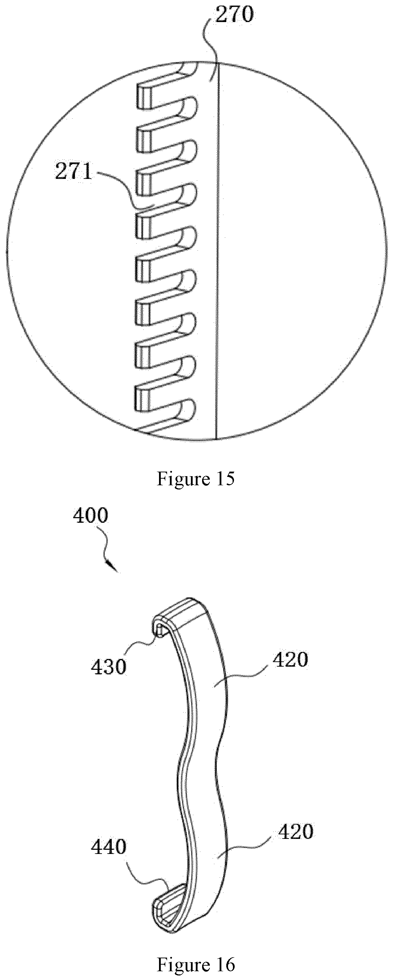

In an embodiment of the disclosure, please refer to FIG. 11. The positioning groove 124 is a strip groove. Please refer to FIG. 16, the shock absorbing unit 400 is a strip spring sheet. The shock absorbing unit 400 is provided with at least one arched part 420 along the length direction.

In some embodiments, please refer to FIG. 16. There are two arched parts 420 , and there is a smooth transition between the two arched parts 420. At this time, arched top areas of the two arched parts 420 are in contact with the outer wall of the cutting frame 200. In actual implementation, one or more arched parts 420 may also be arranged.

In an embodiment of the disclosure, please refer to FIG. 10 and FIG. 16. The supporting base 100 includes the base body 110 and the accommodating drum body 120. The cutting frame 200 is arranged in the accommodating drum body 120, a first end of the shock absorbing unit 400 is bent to form a first hook 430, and a second end of the shock absorbing unit 400 is bent to form a second hook 440. The first hook 430 is hooked on an edge of a first end of the accommodating drum body 120, and the second hook 440 is hooked on an edge of a second end of the accommodating drum body 120. In this structure, the shock absorbing unit 400 can be positioned on the supporting base 100 without any additional parts.

Correspondingly, please refer to FIG. 11. A length direction of the positioning groove 124 is substantially parallel to an axis direction of the accommodating drum body 120, so that a length direction of the shock absorbing unit 400 is substantially consistent with the axial direction of the accommodating drum body 120, and a resistance of the linear motion of the cutting frame 200 relative to the shock absorbing unit 400 is small.

In an actual implementation process, the positioning groove 124 may also be an annular groove or an arc groove arranged on a cavity wall of the accommodating cavity. When the positioning groove 124 is the annular groove, the shock absorbing unit is correspondingly the annular spring sheet, which includes a plurality of arched parts along the circumferential direction, and the arched top area of each arched part contacts the outer wall of the cutting frame 200. When the positioning groove 124 is the arc groove, a long side of the arc groove is along the circumferential direction of the accommodating drum body 120, and the shock absorbing unit is a circular arc strip spring sheet corresponding to the arc groove. The circular arc strip spring sheet also includes at least one arched part along the circumferential direction, and the arched top area of the arched part contacts the outer wall of the cutting frame 200.

In an embodiment of the disclosure, there are the plurality of the shock absorbing units 400 and are arranged at intervals along the circumference direction of the cutting frame 200. In this embodiment, there are three shock absorbing units 400 arranged along the circumference direction of the cutting frame 200.

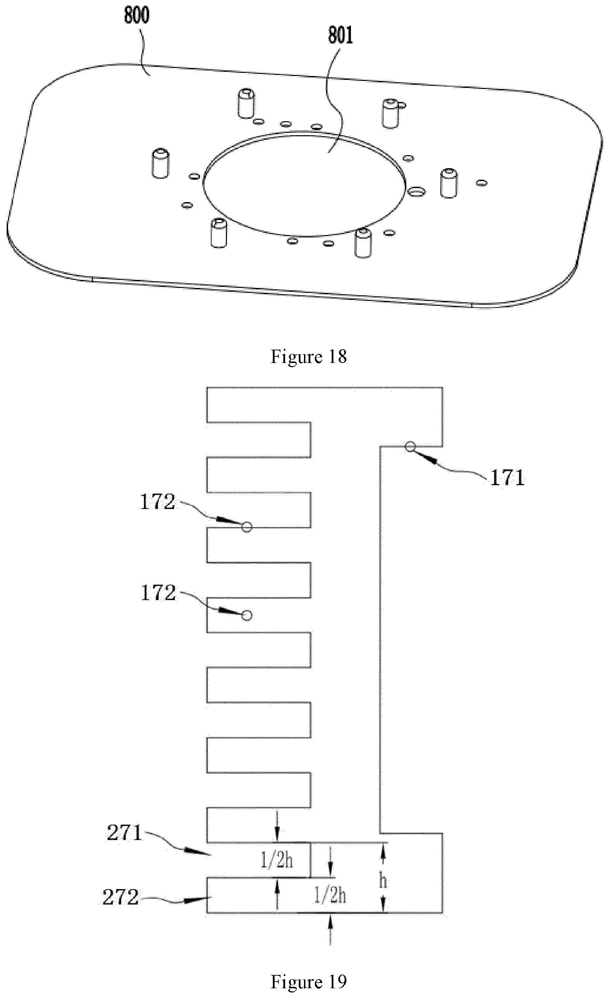

In an embodiment of the disclosure, please refer to FIG. 19. The electric height adjustment device further includes the measuring structure configured to sense the adjustment height of the cutting frame. The measuring structure includes the signal triggering part 270 and at least two first sensors 172. The signal triggering part 270 is provided with the plurality of hollow areas 271 and the plurality of shielding areas 272, and the hollow areas 271 and the shielding areas 272 are alternately distributed along the height direction. The first sensors 172 are configured to sense the hollow areas 271 and the shielding areas 272 and arranged at intervals along the height direction, and signals collected by at least two of the first sensors 172 have the phase difference. The height direction is the lifting direction of the cutting frame 200.

When the height is adjusted, signal waveforms obtained by the two first sensors are substantially the same, but phases between the two first sensors are different. The movement direction of the cutting frame may be determined according to positive and negative values of the phase difference between the two sensors.

Compared with the method of measuring and adjusting the height using a single sensor, this measuring structure can jointly determine the movement direction of the cutting frame 200 through the signals collected by each first sensor.

In addition, if the single sensor is used to measure and adjust the height, when the sensor stops near a boundary between the shielding area 272 and the hollow area 271, since the sensor may vibrate slightly during cutting, it is impossible to determine whether a corresponding position of the sensor is in the shielding area 272 or the hollow area 271 based on the data collected by the single sensor, and a measurement accuracy is low. If at least two of the above-mentioned first sensors are used to collect, measure and adjust the height, when one of the first sensors is correspondingly near of the boundary between the shielding area 272 and the hollow area 271, a current height adjustment position may also be determined based on the other first sensor. Compared with the method of using the single sensor to collect signals, the method of using at least two first sensors to collect signals in this embodiment can achieve a denoising effect and has a higher measurement accuracy.

In an embodiment of the disclosure, the measuring structure includes two first sensors 172, sizes of the hollow area 271 and the shielding area 272 in the height direction are both 1/2h, and h is a sum of the sizes of the hollow area 271 and the shielding area 272 in the height direction. A distance between the two first sensors 172 in the height direction is equal to nh+1/4h, wherein n is a natural number. At this time, height data obtained by the two sensors have an error of up to 1/4h.

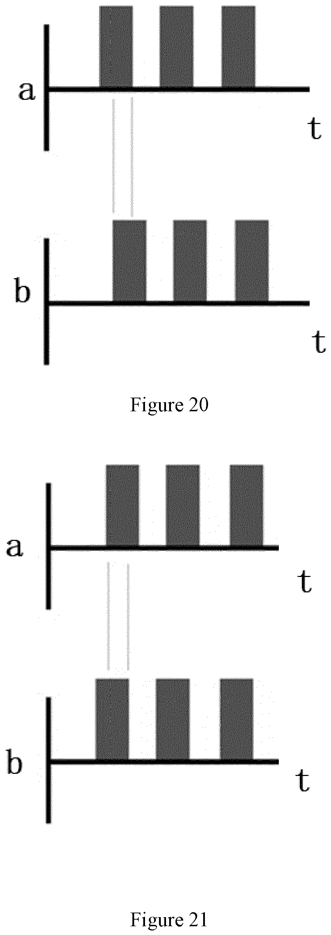

If the signal triggering part 270 is arranged on the cutting frame 200 and each of the first sensors 172 is arranged on the supporting base 100, the first sensor on an upper side of a viewing direction in FIG. 19 is defined as sensor a, and the first sensor 172 on a lower side of the viewing direction in FIG. 19 is defined as sensor b. When the cutting frame 200 moves upward, signal waveforms collected by sensor a and sensor b are shown in FIG. 20. When the cutting frame 200 moves downward, the signal waveforms collected by sensor a and sensor b are shown in FIG. 21.

In some embodiments, please refer to FIG. 10, FIG. 14, FIG. 15 and FIG. 19. The cutting frame 200 includes a frame body 260, the signal triggering part 270 is arranged on the frame body 260 and is capable of linear motion with the cutting frame 200, and each of the first sensors 172 is arranged on the supporting base 100.

In some embodiments, the first sensor 172 and the second sensor 171 are both through-beam photoelectric sensors.

In some embodiments, please refer to FIG. 12. The supporting base 100 is provided with a sensor bracket 170, and a signal transmitter and a signal receiver are both arranged on the sensor bracket 170.

Please refer to FIG. 9, FIG. 11 and FIG. 14. In an embodiment of the disclosure, an avoidance groove 123 is arranged on an inner wall of the accommodating cavity 14, and the signal triggering part 270 is arranged in the avoidance groove 123.

Please refer to FIG. 13 and FIG. 19. The supporting base 19 is provided with a second sensor 171 to sense a height adjustment limiting position. In the actual implementation process, the height adjustment limiting position usually includes a highest adjustment limiting position and a lowest adjustment limiting position. The lowest adjustment limiting position and the height adjustment limiting position may be hollowed out and shielded changing positions, and the changing positions avoid the above-mentioned hollow areas 271 and shielding areas 272. For example, please refer to FIG. 19, an area between the height adjustment limiting position and the lowest adjustment limiting position is hollowed out, but an area above the height adjustment limiting position and an area below the lowest adjustment limiting position are non-hollowed out.

Please refer to FIG. 10. In an embodiment of the disclosure, the sealing cover 500 is connected between the cutting frame 200 and the bottom of the supporting base 100, the plurality of connected folding sections is arranged on the sealing cover 500, and when the cutting frame 200 performs the reciprocating linear motion, the sealing cover 500 expands or contracts. The shield bottom hole is arranged at the bottom of the sealing cover 500 for the output end of the cutting prime mover 600 to extend out, and the sealing cover 500 plays the role in dust and water protection for the cutting frame 200. In addition, the sealing cover 500 may not only expand and contract in a vertical direction (the movement direction of the cutting frame), but also can play the shock-absorbing role in the horizontal direction.

Please refer to FIG. 10. In an embodiment of the disclosure, a supporting protective plate 800 for supporting the supporting base 100 is arranged at the bottom of the supporting base 100, and the sealing cover 500 is arranged between a bottom of the supporting protective plate 800 and the cutting frame 200. The supporting protective plate 800 and the sealing cover 500 can block splashing dirt, water droplets and other impurities, and play the protective role for the supporting base 100, the cutting frame 200, and the driving assembly 300.

Please refer to FIG. 10, FIG. 12 and FIG. 18. In an embodiment of the disclosure, a through hole 801 is arranged on the supporting protective plate 800, and the lower drum body 120b penetrates the through hole 801.

Please refer to FIG. 10. In an embodiment of the disclosure, an outer size of one end of the sealing cover 500 connected with a bottom of the supporting protective plate 800 is larger than the outer size of one end of the sealing cover 500 connected with the bottom of the cutting machine 200, and the sealing cover 500 is in the truncated cone shape.

Please refer to FIG. 10. In an embodiment of the disclosure, an upper end of the sealing cover 500 is pressed against the bottom surface of the supporting protective plate 800 through a fixing ring 900, and a lower end of the sealing cover 500 is connected with a lower part of the cutting frame 200. The fixing ring 900 is installed at the bottom of the supporting protective plate 800 through bolts.

The disclosure provides the mower. The mower includes the casing, the electric height adjustment device, the cutting assembly, the walking assembly and the control assembly.

The electric height adjustment device is installed on the casing, and configured to adjust the height of the cutting prime mover from the ground.

The cutting assembly is connected with the cutting prime mover 600 for cutting.

The walking assembly is located at the bottom of the casing.

The control assembly is configured to control the electric height adjustment device to work.

Wherein, the electric height adjustment device includes the supporting base 100, the cutting frame 200 and the driving assembly 300.

The supporting base 100 is provided with the accommodating cavity 121.

The cutting frame 200 is arranged in the accommodating cavity 121 of the supporting base 100, capable of performing the reciprocating linear motion in the direction perpendicular to the working plane and configured to carrying the cutting prime mover 600.

the driving assembly 300 includes the electric driving unit 310 fixed on the supporting base 100, the second transmission structure 350 connected with the cutting frame 200 and the first transmission structure 340 connected between the electric driving unit 310 and the second transmission structure 350. The first transmission structure 340 includes the worm gear 342 and the worm 341 that match each other. The worm 341 is connected with the output end of the electric driving unit 310, and the worm gear 342 is connected with second transmission structure 350. The second transmission structure 350 is configured to convert the rotation motion of the worm gear 342 into the linear motion of the cutting frame 200 in the direction perpendicular to the working plane. The height of the cutting prime mover 600 from the ground can be adjusted by the driving assembly 300.

In an embodiment of the disclosure, the walking assembly includes moving wheels, at least three moving wheels are arranged and mounted on the casing to facilitate the mower to walk, and the walking assembly further includes the motor for driving the moving wheels to rotate.

In an embodiment of the disclosure, the cutting assembly includes the cutting disc and the plurality of cutting blades installed on the cutting disc. The cutting blades are evenly distributed along the circumference of the cutting disc. The cutting assembly is driven to move through the cutting prime mover 600 for cutting. Since the output end of the cutting prime mover 600 is connected with the cutting assembly, the height of the cutting frame 200 may be adjusted by the electric height adjustment device, so that the height of the cutting prime mover 600 from the ground may be adjusted, thereby achieving the adjustment of the height of the cutting assembly from the ground.

According to different needs of users, the electric height adjustment device is controlled by the control assembly to adjust different cutting heights. Wherein, through controlling the electric driving unit 310 through an electric control system, the height of the cutting prime mover 600 from the ground may be adjusted. This may be achieved through the remote control or through the own electrical control panel of the device.

In summary, with the electric height adjustment device and the mower of the disclosure, the rotation motion of the electric driving unit 310 is converted into linear motion of the cutting frame 200 through the first transmission structure 340 and the second transmission structure 350, so that the height of the cutting frame from the ground can be adjusted. The height adjustment of the cutting prime mover 600 may be achieved through controlling the electric driving unit 310. There is no need for manual close operation to adjust the cutting height, which is convenient for improving the automation of the mower and is also conducive to remote operation.

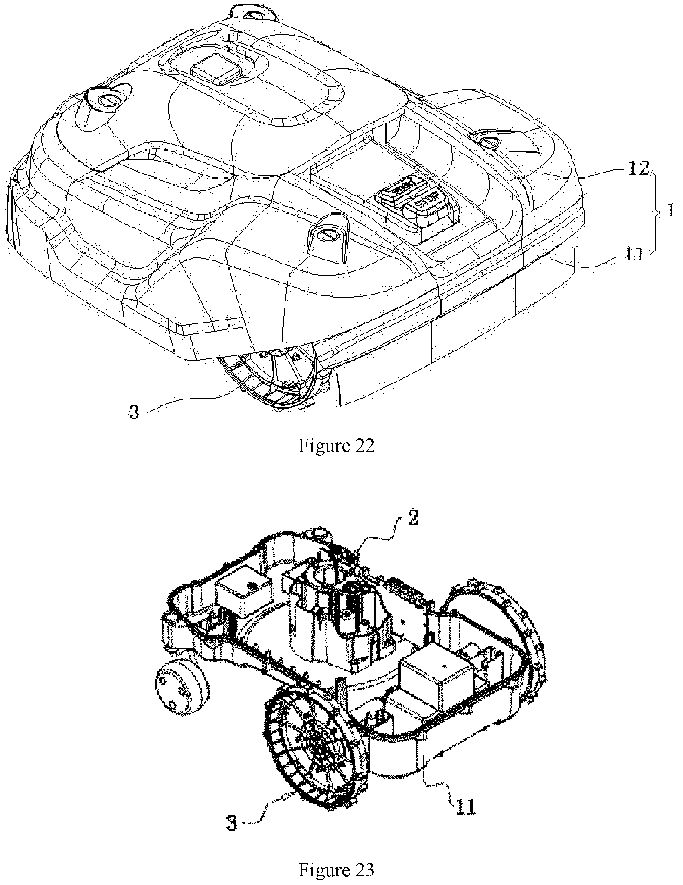

Please refer to FIG. 22 and FIG. 23. The disclosure provides the mower used for maintaining and mowing lawns, plants and the like. In order to be applicable to different terrain environments, the cutting height of the mower provided by the disclosure may be adjusted. Technical solution provided in the disclosure is not only applicable to electric mowers, but also to mowers with other traveling modes such as stepping mowers, hand-propelled mowers, and riding mowers, or mowers driven by other power sources such as gasoline engines and solar energy.

Please refer to FIG. 22 and FIG. 23. In this disclosure, the mower includes the casing 1, a cutting device (not marked in the figure), the electric height adjustment device 2 and the walking device 3. Wherein, the cutting device is at least partially installed inside the casing 1, and the cutting device and components of the cutting device extend outer side the casing 1. The cutting device is set to be lifted and lowered relative to the casing 1. The electric height adjustment device 2 is installed in the casing 1, and is used to adjust the cutting height of the cutting device. A sliding passage 21 is formed in the casing 1, and the cutting device is connected in the sliding passage 21 for lifting. The walking device 3 is arranged at a bottom of the casing 1 to realize an overall movement of the mower during operation.

Please refer to FIG. 22 and FIG. 23. In this embodiment, the casing 1 includes a base 11 and a cover 12 movable relative to the base 11, and a cavity is formed on the base 11, which may be used to install various components in the mower. The casing further includes the supporting base, which is used to install the electric height adjustment device. Wherein, openings (not marked in the figure) are arranged at positions on the base 11 and the supporting base 100 corresponding to the cutting device, and the openings are communicated with the sliding passage 21 in the electric height adjustment device 2. In addition, the cutting device may slide in the sliding passage 21, and the cutting device at least partially extends to an outer side of the base in a direction away from the cover 12, so that the cutting device can cut lawns, vegetation, etc. It should be noted that, the sliding passage 21 is parallel to an axial direction of the cutting device, which means that the height adjustment direction is parallel to the axial direction of the cutting device.

Please refer to FIG. 22 and FIG. 23. The walking device 3 is installed on the base 11 to facilitate a movement of the mower. In this embodiment, the walking device 3 includes two driving wheels and two driven wheels, and the two driving wheels may be connected by a rotating shaft. In some embodiments, the driving wheel may be connected with the motor or the engine by the rotating shaft, so that the driving wheel has a driving force. In addition, the driven wheel may adopt a universal wheel to realize an adjustment of the moving direction. Specific structures of the driving wheel and the driven wheel belong to the prior art and will not be described here.

Please refer to FIG. 22 and FIG. 23. In an embodiment of the disclosure, the cutting device includes a power machine and a cutting blade. Wherein, the power machine is installed on the cutting frame 200 in the electric height adjustment device 2, and moves up and down along the sliding passage 21 with the cutting frame 200. It should be noted that the power machine may be an electric motor, a gasoline engine or other power mechanism. In this embodiment, the power machine is the electric motor. In addition, an output shaft of the power machine passes through the cutting frame 200 and the base 11 in sequence, and is located on an outer side of the base 11. The cutting blade is coaxially fixed with one end of the output shaft of the power machine facing the ground, and there is a certain angle with the output shaft of the power machine to realize the mowing of the mower.

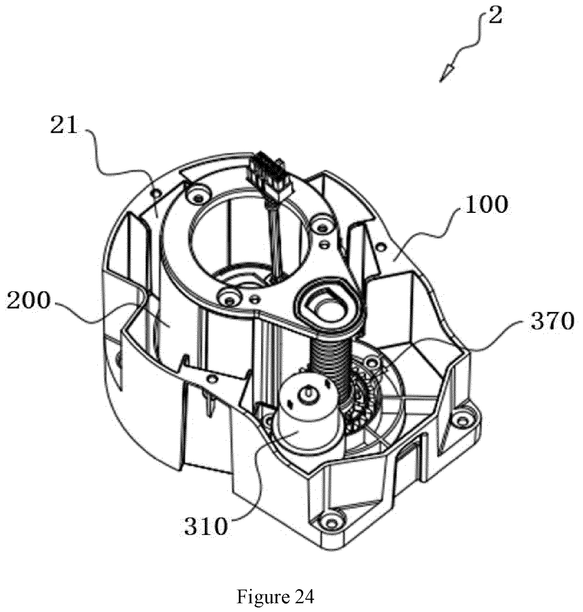

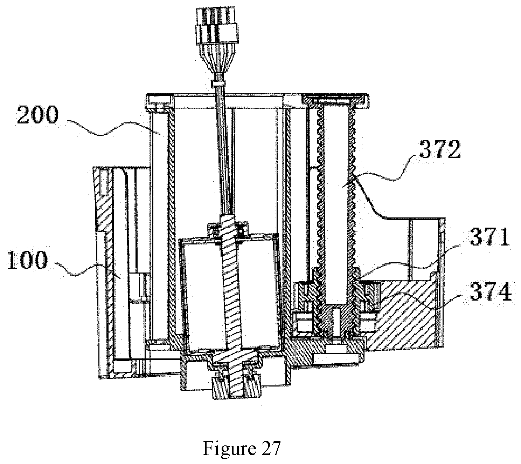

Please refer to FIG. 24 through FIG. 27. The electric height adjustment device 2 is described in detail below. In this embodiment, the electric height adjustment device 2 includes the cutting frame 200 and a transmission assembly 370. The transmission assembly 370 includes the electric driving unit 310 and the transmission structure 330. The transmission structure 330 includes the linear motion component 332 and the rotating assembly 390. The linear motion component 332 includes a screw rod 372 fixedly connected with the cutting frame 200, and the rotating assembly 390 includes a threaded tube 371, a driving gear 373 and a driven gear 374. The driving gear 373 is coaxially fixed with the output shaft of the electric driving unit 310, and the driven gear 374 is coaxially sleeved on an outer side of the threaded tube 371 and connected with the threaded tube 371. An external thread of the screw rod 372 is meshed with an internal thread of the threaded tube 371, and the threaded tube 371 is driven to rotate by the electric driving unit 310 and drives the linear motion component 332 to move linearly. Wherein, the supporting base 100 is installed on the base 11 and is located in a cavity formed on the base 11. The supporting base 100 may be used to install the electric driving unit 310, the transmission assembly 370 and the cutting frame 200. It should be noted that the cutting frame 200 is slidingly connected with the supporting base 100, and the electric driving unit 310 is in a transmission connection with the cutting frame 200 through the transmission assembly 370, so that the cutting frame 200 may be reciprocated and lifted.

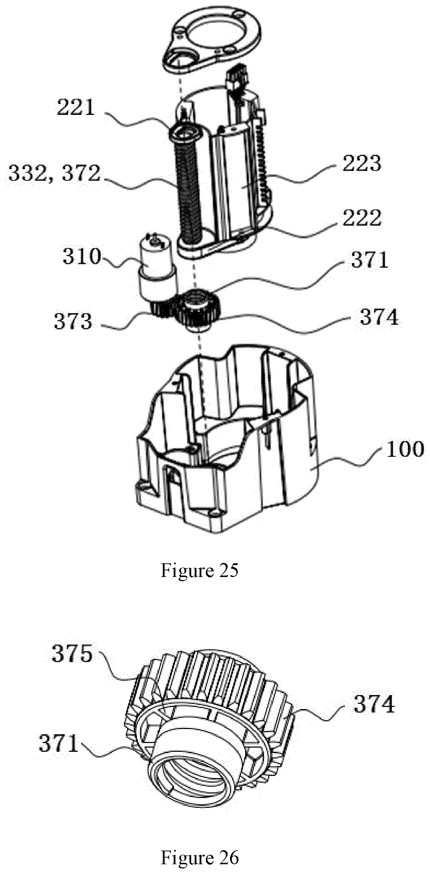

Please refer to FIG. 24 and FIG. 25. In this embodiment, a top of the supporting base 100 is an opening, and the bottom of the supporting base 100 is provided with a through hole (not shown in the figure) for the output shaft of the power machine to pass through. The sliding passage 21 is formed inside the supporting base 100, and the cutting frame 200 is slidably connected in the sliding passage 21. Further, the cutting frame 200 is in a hollow cylindrical shape, and an internal hollow part of the cutting frame 200 is used to install the cutting motor and for a wiring harness connected with the cutting motor to pass. The cutting frame 200 is further integrally formed with a first lug plate 221 and a second lug plate 222. The first lug plate 221 is located on a side wall at the top of the cutting frame 200, and the second lug plate 222 is located on a side wall at the bottom of the cutting frame 200. Centers of the first lug plate 221 and the second lug plate 222 are located on a same straight line, and a space between the first lug plate 221 and the second lug plate 222 is used to install the screw rod 372 in the transmission assembly 370.

In addition, the outer side wall of the cutting frame 200 is provided with the mounting groove 223, and a guiding mechanism (not shown) or a shock absorbing mechanism (not shown) can be installed in the mounting groove 223. The guiding mechanism and the shock absorbing mechanism can slide relative to each other along the length direction of the mounting groove 223 to achieve a height adjustment guidance of the cutting frame 200. In addition, the shock absorbing mechanism uses a principle of elastic buffering to reduce an impact of a vibration generated by the mower during the movement on the cutting frame 200, thereby ensuring a stability of the cutting frame 200. It should be noted that three mounting grooves 223 are opened along the circumferential direction of the cutting frame 200, and the guiding mechanism or the shock absorbing mechanism corresponds one by one to the mounting grooves 223. In some embodiments of the disclosure, the shock absorbing mechanism and the guiding mechanism may be made of metal materials, such as aluminum profiles.

Please refer to FIG. 25 and FIG. 26. In this embodiment, the electric driving unit 310 is fixed on the supporting base 100 and is located between the supporting base 100 and the cutting frame 200. The transmission assembly 370 is in a transmission connection with the electric driving unit 310 and the cutting frame 200 and converts the rotation motion of the output shaft of the electric driving unit 310 into the linear motion of the cutting frame 200.

Further, the transmission assembly 370 includes the threaded tube 371, the screw rod 372, the driving gear 373 and the driven gear 374. Wherein, the driving gear 373 is coaxially fixed with the output shaft of the electric driving unit 310, and the driving gear 373 and the driven gear 374 are meshed with each other. It should be noted that a number of teeth of the driven gear 374 is greater than a number of teeth of the driving gear 373. In this embodiment, the driven gear 374 is set as a hollow cylinder, and an outer side wall of the driven gear 374 is formed with teeth meshed with the driving gear 373. The driven gear 374 is coaxially sleeved on an outer side of the threaded tube 371. The threaded tube 371 is connected with the driven gear 374 through a rib plate 375, and the rib plate 375 is located between the threaded tube 371 and the driven gear 374. There is a plurality of rib plates 375 arranged at intervals along a circumferential direction of the threaded tube 371. The rib plates 375 may increase a connection strength between the threaded tube 371 and the driven gear 374. Compared with directly inserting the threaded tube 371 on the driven gear 374, this connection method may reduce an overall weight of the driven gear 374 and the threaded tube 371, thereby reducing an overall weight of the mower. In other embodiments of the disclosure, an internal thread may also be directly provided inside the driven gear 374, and the internal thread may be meshed with an external thread of the screw rod 372.

Please refer to FIG. 25, FIG. 26 and FIG. 27. A first end of the screw rod 372 is fixed to the first lug plate 221, and a second end of the screw rod 372 passes through the second lug plate 222 and extends outward. It should be noted that a height adjustment range of the cutting frame 200 is limited by a portion of the screw rod 372 inside the first lug plate 221 and the second lug plate 222. The specific height adjustment range may be adjusted according to an actual use of the mower. The screw rod 372 is threadedly connected with the threaded tube 371, and a connection method is that the external thread of the screw rod 372 is meshed with the internal thread of the threaded tube 371. It should be noted that the screw rod 372 cannot be rotated, and a reciprocating lifting and lowering of the cutting frame 200 is achieved by rotating the threaded tube 371. In addition, a fixing groove (not shown) is formed on the bottom wall of the supporting base 100 at a position corresponding to the threaded tube 371, and one end of the threaded tube 371 is embedded in the fixing groove, and the threaded tube 371 may rotate in the fixing groove.

By fixing the threaded tube 371 directly to the driven gear 374 and adopting a transmission method of the internal thread of the threaded tube 371 with the external thread of the screw rod 372, transmission efficiency may be improved, a momentum loss during a transmission process may be reduced, a power consumption of the electric driving unit may be reduced, and an overall use cost of the mower may be reduced.

**A** height adjustment of the cutting blade from the ground in the mower is briefly described. In actual work, the electric driving unit 310 is started, and an output shaft of the electric driving unit 310 drives the driving gear 373 to rotate. A rotation of the driving gear 373 drives a rotation of the driven gear 374, thereby driving the threaded tube 371 fixed to the driven gear 374 to rotate. Since the screw rod 372 cannot be rotated, the screw rod 372 is reciprocated and lifted under a transmission of the threaded tube 371, thereby causing the cutting frame 200 to reciprocate and lift. The reciprocating and lifting of the cutting frame 200 realizes the height adjustment of the cutting blade from the ground.

In summary, through fixing the threaded tube 371 directly to the driven gear 374 and adopting the transmission method of the internal thread of the threaded tube 371 with the external thread of the screw rod 372, the transmission efficiency may be improved, the momentum loss during a transmission process may be reduced, the power consumption of the electric driving unit may be reduced, and the overall use cost of the mower may be reduced. Therefore, the disclosure effectively overcomes various shortcomings of the prior art and has high industrial utilization value.

The above embodiments only illustrate principles and effects of the disclosure, but are not intended to limit the disclosure. Anyone familiar with this technology may modify or change the above embodiments without departing from a scope of the disclosure. Therefore, all equivalent modifications or changes made by those with ordinary knowledge in the technical field without departing from the technical ideas disclosed in the disclosure shall still be covered by the claims of the disclosure.

## Claims

1. An electric height adjustment device, comprising:
a supporting base (100), the supporting base (100) provided with an accommodating cavity (121);
a cutting frame (200), the cutting frame (200) arranged in the accommodating cavity (121) of the supporting base (100), capable of performing a reciprocating linear motion in a direction perpendicular to a working plane and configured to carry a cutting prime mover (600);
a driving assembly (300), the driving assembly (300) including an electric driving unit (310) fixed on the supporting base (100) and a transmission structure (330) connected with the cutting frame (200), the transmission structure (330) configured to convert a rotation motion of the electric driving unit (310) into a linear motion to drive the cutting frame (200) to perform linear motion, and a height of the cutting prime mover (600) from a ground being adjustable through the driving assembly (300); and
a measuring structure configured to sense an adjustment height of the cutting frame (200), the measuring structure including:
a signal triggering part (270), the signal triggering part (270) provided with a plurality of hollow areas (271) and a plurality of shielding areas (272), the hollow areas (271) and the shielding areas (272) alternately distributed along a height direction, and the height direction being a lifting direction of the cutting frame (200), and
at least two first sensors (172), the first sensors (172) configured to sense the hollow areas (271) and the shielding areas (272) and arranged at intervals along the height direction, and signals collected by at least two of the first sensors (172) having a phase difference.

2. The electric height adjustment device according to claim 1, wherein:
the measuring structure comprises two first sensors (172), sizes of the hollow area (271) and the shielding area (272) in the height direction are both 1/2h, and a distance between the two first sensors (172) in the height direction is equal to nh+1/4h, where n is a natural number.

3. The electric height adjustment device according to claim 1, wherein:
the cutting frame (200) comprises a frame body (260), the signal triggering part (270) is arranged on the frame body (260) and is capable of linear motion with the cutting frame (200), and each of the first sensors (172) is arranged on the supporting base (100).

4. The electric height adjustment device according to claim 3, wherein:
an avoidance groove (123) is arranged on an inner wall of the accommodating cavity (121), and the signal triggering part (270) is arranged in the avoidance groove (123).

5. The electric height adjustment device according to claim 1, wherein:
the supporting base (100) is provided with a second sensor (171) to sense a height adjustment limiting position.

6. The electric height adjustment device according to any one of claims 1 to 5, wherein:
the transmission structure (330) comprises a linear motion component (332, 352) connected with the cutting frame (200) and having a motion direction perpendicular to the working plane, and a rotating assembly (390) connected between the linear motion components (332, 352) and the electric driving unit (310), the electric driving unit (310) is in a transmission connection with the linear motion components (332, 352) through the rotating assembly, and the rotating assembly is configured to convert the rotation motion of the electric driving unit (310) into a linear motion of the linear motion components (332, 352) to drive the cutting frame (200) to move linearly.

7. The electric height adjustment device according to claim 6, wherein:
the linear motion component (332) comprises a screw rod (372) fixedly connected with the cutting frame (200), the rotating assembly (390) comprises a threaded tube (371), the threaded tube (371) is driven to rotate by the electric driving unit (310), an external thread of the screw rod (372) is meshed with an internal thread of the threaded tube (371), and the screw rod is fixed to the cutting frame (200).

8. The electric height adjustment device according to claim 7, wherein: the rotating assembly (390) further comprises:
a driving gear (373), the driving gear (373) coaxially fixed to an output shaft of the electric driving unit (310), and
a driven gear (374), the driven gear (374) coaxially sleeved on an outer side of the threaded tube (371) and connected with the threaded tube (371).

9. The mower according to claim 8, wherein:
the threaded tube (371) is connected with the driven gear (374) through a rib plate, the rib plate (375) is located between the threaded tube (371) and the driven gear (374), and a plurality of rib plates (375) are arranged at intervals along a circumference of the threaded tube (371).

10. The electric height adjustment device according to claim 7, wherein:
the cutting frame (200) is integrally formed with a first lug plate (221) and a second lug plate (222), the first lug plate (221) is located at a top of a side wall of the cutting frame (200), the second lug plate (222) is located at a bottom of the side wall of the cutting frame (200), and centers of the first lug plate (221) and the second lug plate (222) are located on a same straight line and are configured to install the screw rod (372).

11. The electric height adjustment device according to claim 10, wherein:
a first end of the screw rod (372) is fixed to the first lug plate (221), a second end of the screw rod (372) passes through the second lug plate (222) and is threadedly connected with the threaded tube (371), and the threaded tube (371) is located between the first lug plate (221) and the second lug plate (222).

12. The electric height adjustment device according to claim 6, wherein:
the rotating assembly (390) comprises a rotation motion component (331) connected with the electric driving unit (310), the rotation motion component (331) is provided with a first tooth part, the linear motion component (332) is provided with a second tooth part, and the first tooth part and the second tooth part are meshed with each other.

13. The electric height adjustment device according to claim 12, wherein:
the transmission structure (330) is connected with an output end of the electric driving unit (310) through a transmission shaft (321), and the transmission shaft (321) is arranged horizontally.

14. The electric height adjustment device according to claim 12, wherein:
the rotating assembly (390) further comprises a speed regulating mechanism (320), the transmission structure (330) is connected with the output end of the electric driving unit (310) through the reversing speed regulating mechanism (320), the reversing speed regulating mechanism (320) comprises a first rotation component connected with the output end of the electric driving unit (310) and a second rotation component connected with the rotation motion component (331), the first rotation component and the second rotation component move in coordination, rotation axes of the first rotation component and the second rotation component are perpendicular to each other, and rotation axes of the rotation motion component (331) and the second rotation component are coaxial.

15. The electric height adjustment device according to any one of claims 12 to 14, wherein:
The rotation motion component (331) is a gear, and the linear motion component (332) is a gear rack.

16. The electric height adjustment device according to claim 6, wherein:
the rotating assembly (390) comprises a transmission rod (351) and a first transmission structure (340), both of the transmission rod (351) and the first transmission structure (340) are connected between the electric driving unit (310) and the linear motion component (352), the first transmission structure (340) comprises a worm gear (342) and a worm (341) that match each other, the worm (341) is connected with the output end of the electric driving unit (310), the worm gear (342) is connected with a first end of the transmission rod (351), a second end of the transmission rod (351) is connected with the linear motion component (352), and the linear motion component (352) is configured to convert a rotation motion of the worm gear (342) into the linear motion of the cutting frame (200) in the direction perpendicular to the working plane.

17. The electric height adjustment device according to claim 16, wherein:
the linear motion component (352) is provided with a screw hole (3522a), and the transmission rod (351) is inserted into the screw hole (3522a) and threaded with the screw hole (3522a).

18. The electric height adjustment device according to claim 16, wherein:
the worm gear (342) is coaxially sleeved on the transmission rod (351), rotation axes of the transmission rod (351) and the worm gear (342) are along the vertical direction, and the rotation axis of the worm (341) is along the horizontal direction.

19. The electric height adjustment device according to claim 6, further comprising a shock absorbing unit (400) arranged between the cutting frame (200) and the supporting base (100), wherein
the shock absorbing unit (400) is elastic, a first side of the shock absorbing unit (400) is clamped on an outer wall of the cutting frame (200), and a second side of the shock absorbing unit (400) is configured to slide relative to an inner wall of the supporting base (100);
a sealing cover (500) is connected between the cutting frame (200) and a bottom of the supporting base (100), a plurality of connected folding sections is arranged on the sealing cover (500), and when the cutting frame (200) performs the reciprocating linear motion, the sealing cover (500) expands or contracts.

20. A mower, comprising:
a casing;
the electric height adjustment device according to any one of claims 1 to 19, the electric height adjustment device installed on the casing, and configured to adjust a height of the cutting prime mover (600) from the ground;
a cutting assembly, the cutting assembly connected with the cutting prime mover (600) to perform a cutting operation;
a walking assembly, the walking assembly located at a bottom of the casing, and
a control assembly, the control assembly configured to control the electric height adjustment device to work.
